# EUROPEAN PATENT APPLICATION

(11) **EP 4 372 450 A1**
(43) Date of publication of application: **22.05.2024**
(21) Application number: 23773162.5
(22) Date of filing: 27.09.2023
(51) Int. Cl.: G02B 27/00, G02B 27/01, G02C 11/08, G02C 5/00, G06F 3/01

(54) **WEARABLE ELECTRONIC DEVICE INCLUDING ANTI-FOGGING STRUCTURE**

(30) Priority: 30.09.2022 KR 20220125555; 09.11.2022 KR 20220148893
(71) Applicant: Samsung Electronics Co., Ltd., Suwon-Si, Gyeonggi-do 16677 (KR)
(72) Inventor: JUNG, Kwangho, Suwon-si, Gyeonggi-do 16677 (KR); JEON, Jinhwan, Suwon-si, Gyeonggi-do 16677 (KR); CHO, Chihyun, Suwon-si, Gyeonggi-do 16677 (KR); HA, Sangwon, Suwon-si, Gyeonggi-do 16677 (KR); LEE, Kyuhwan, Suwon-si, Gyeonggi-do 16677 (KR); LEE, Haejin, Suwon-si, Gyeonggi-do 16677 (KR)
(74) Representative: HGF
(86) International application number: PCT/KR2023/014996
(87) International publication number: WO 2024/072081

(57) **Abstract**

According to an embodiment of the disclosure, a wearable electronic device may be provided, which includes: a display member including a heat conductor at least partially disposed thereon; a first heat transfer member disposed adjacent to at least one electronic component; and a second heat transfer member connected to the display member. The first heat transfer member is configured to transfer heat from the at least one electronic component to the second heat transfer member, and the second heat transfer member is configured to transferring heat from the first heat transfer member toward the heat conductor. A wearable electronic device according to various other embodiments is available.

## Description

### [Technical Field]

An embodiment of the disclosure relates to, for example, a wearable electronic device including an anti-fog structure.

### [Background Art]

Along with the recent rapid development and increased use of electronic devices having new functions, electronic devices such as portable terminals have become more important in people's lives. For portable terminals such as smart phones, which have become common due to the development of mobile communication technology, miniaturization and a low weight are increasingly demanded to maximize user portability and convenience, and integrated components are disposed in a smaller space, for high performance.

A portable terminal such as a smart phone has been developed into a wearable type that may be worn on a body part such as a wrist or a head through repeated miniaturization and a low weight. For example, a head-mounted device, smart glasses, a smart watch (or band), a contact lens-type device, a ring-type device, a glove-type device, a shoe-type device, or a clothing-type device may be worn on a user's body. Such body-wearable electronic devices are easy to carry and may improve user accessibility.

As a wearable device that may be mounted on the head (hereinafter, referred to as a "head mounting device"), smart glasses are disclosed, in which a display member (e.g., a lens unit) is mounted on a frame structure of glasses, and a virtual object may be processed or provided through the display member. The smart glasses may include, for example, virtual reality (VR) glasses or augmented reality (AR) glasses.

In a situation where a user carries out activities while wearing smart glasses, for example in a cold season such as winter, when the user enters a relatively high-temperature indoors environment from a relatively low-temperature outdoors environment, fogging may occur on the display member of the glasses. This may reduce user satisfaction or, more generally, usability of the smart glasses.

The above information is presented as background information only to assist with an understanding of the disclosure. No determination has been made, and no assertion is made, as to whether any of the above might be applicable as prior art with regard to the disclosure.

### [Disclosure of Invention]

### [Solution to Problems]

According to an embodiment of the disclosure, a wearable electronic device includes a display member including a heat conductor at least partially disposed thereon, a first heat transfer member disposed adjacent to at least one electronic component, and a second heat transfer member connected to the display member. The first heat transfer member is configured to transfer heat from the at least one electronic component to the second heat transfer member, and the second heat transfer member is c configured to transferring heat from the first heat transfer member toward the heat conductor.

According to an embodiment of the disclosure, a wearable electronic device includes at least one display member, a housing including a first surface facing a first direction and a second surface facing a second direction opposite to the first direction, and formed to allow a first heat transfer member to be disposed adjacent to the first surface in an internal space and to bring the second surface into close contact with a user's skin, when the user wears the wearable electronic device, a board disposed in the internal space, an electronic component disposed on at least one surface of the board, a heat transfer member disposed between the electronic component and the housing, and a second heat transfer member connecting the display member and the housing to each other and transferring heat from the first heat transfer member toward the display member.

### [Brief Description of Drawings]

FIG. 1 is a block diagram illustrating an electronic device in a network environment according to an embodiment of the disclosure.
FIG. 2 is an exploded perspective view illustrating a wearable electronic device according to an embodiment of the disclosure.
FIG. 3 is a perspective view of an assembled wearable electronic device according to an embodiment of the disclosure.
FIG. 4 is a diagram illustrating a printed circuit board and its peripheral components in a wearable electronic device according to an embodiment of the disclosure.
FIG. 5 is a diagram illustrating a path through which heat is transferred and moved between a first heat transfer member and a second heat transfer member according to an embodiment of the disclosure.
FIG. 6A is a diagram illustrating a path through which heat is transferred and moved between a second heat transfer member and a display member according to an embodiment of the disclosure.
FIG. 6B is a diagram illustrating a path through which heat is transferred and moved between a second heat transfer member and a display member according to an embodiment of the disclosure.
FIG. 6C is a diagram illustrating a path through which heat is transferred and moved between a second heat transfer member and a display member according to an embodiment of the disclosure.
FIG. 7 is a diagram illustrating a wearable electronic device seated in a case housing according to an embodiment of the disclosure.
FIG. 8A is a diagram illustrating a fogged display member according to an embodiment of the disclosure.
FIG. 8B is a diagram illustrating a display member from which fogging has been removed according to an embodiment of the disclosure.
FIG. 9 is a diagram illustrating a method of transferring heat only to a partial area of a display member according to an embodiment of the disclosure.
FIG. 10 is a flowchart illustrating a method of removing, reducing, and/or preventing fogging according to one embodiment of the disclosure.

### [Mode for the Invention]

Conventionally, a structure including a separate heat source and transferring heat from the separate heat source to a display member (e.g., a lens unit) to remove fogging has been disclosed as a structure for preventing or removing fogging from smart glasses.

The method of removing or preventing fogging using a separate heat source in this way may be difficult to apply to an electronic device having a narrow component arrangement space, such as smart glasses. As the method requires additional power to operate the separate heat source in addition to power for performing a function of smart glasses, battery capacity may be significantly insufficient.

In an embodiment of the disclosure, various embodiments are intended to be provided to remove, reduce, and/or prevent fogging without a separate heat source, while improving heat transfer performance of a wearable electronic device having a narrow arrangement space.

Hereinbelow, various embodiments of the disclosure will be described with reference to the accompanying drawings.

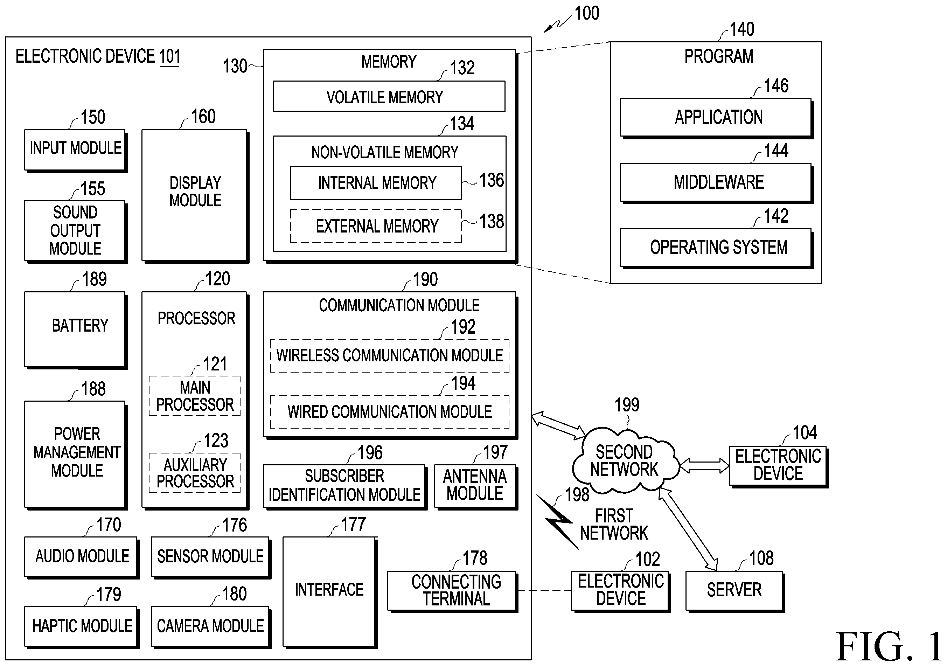

FIG. 1 is a block diagram illustrating an electronic device in a network environment according to various embodiments.

Referring to FIG. 1, an electronic device 101 in a network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in nonvolatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the nonvolatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beamforming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form an mmWave antenna module. According to an embodiment, the mmWave antenna module may include a printed circuit board, a RFIC disposed on a first surface (e.g., the bottom surface) of the printed circuit board, or adjacent to the first surface and capable of supporting a specified high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the specified high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or loT-related technology.

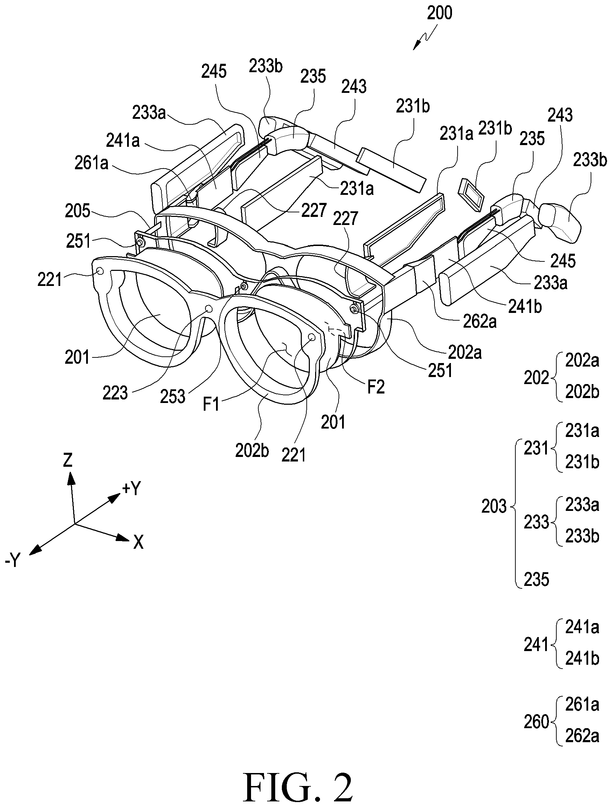

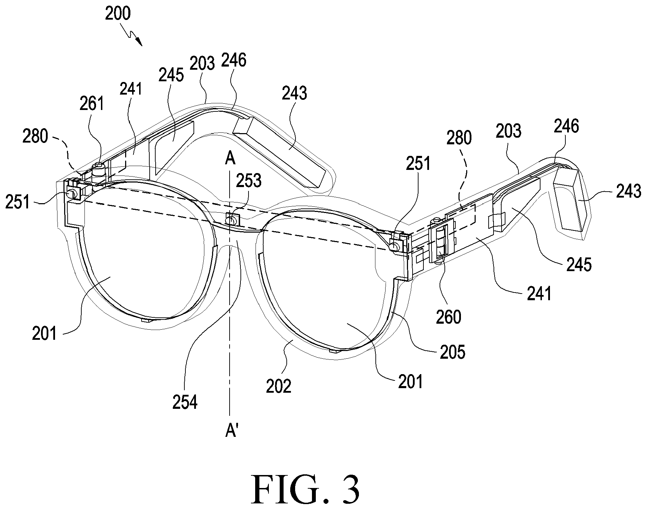

FIG. 2 is an exploded perspective view illustrating a wearable electronic device according to an embodiment of the disclosure. FIG. 3 is a perspective view illustrating an assembled wearable electronic device according to an embodiment of the disclosure. FIGS. 2 and 3 illustrate the arrangement of the interiors of a display member and a wearing member and electronic components adjacent to them according to an embodiment.

In the following detailed description, a length direction, a width direction, and/or a thickness direction of a wearable electronic device 200 may be referred to. The length direction (or longitudinal direction or lengthwise direction) may be defined as a 'Y-axis direction', the width direction (or widthwise direction) may be defined as an 'X-axis direction', and/or the thickness direction (or depth direction) may be defined as a 'Z-axis direction' (i.e., all with reference to the X, Y, Z directions shown in FIG. 2). The wearable electronic device 200 mentioned in various examples of the following description is a glasses-type wearable electronic device that a user may wear on the/their face, and the length direction of the wearable electronic device 200 may be referred to in the context of the wearable electronic device 200 in an unfolded state, by way of example. Regarding a direction in which the components of the disclosure are directed, a 'negative sign/positive sign (-/+)' may be referred to together with the Cartesian coordinate system illustrated in the drawings. For example, a first surface F1 of a display member of the wearable electronic device 200 may be defined as a 'surface facing the -Y direction' and a second surface F2 thereof may be defined as a 'surface facing the +Y direction'. According to another embodiment, a first direction and a second direction may be referred to in the following description, where the first direction corresponds to the -Z direction and the second direction corresponds to the +Z direction. It is to be noted that this is based on the Cartesian coordinate system illustrated in the drawings, for brevity of description, and the description of these directions or components does not limit various embodiments of the disclosure.

Referring to FIGS. 2 and 3, the wearable electronic device 200 (e.g., the electronic device 101 of FIG. 1) is an electronic device in the form of glasses, and, while wearing the wearable electronic device 200, a user may visually recognize or see an object or an environment around the user. The wearable electronic device 200 may obtain and/or recognize a visual image of an object or an environment in a direction (e.g., -Y direction) that the user looks at or the wearable electronic device 200 faces, using a camera module 251 (e.g., the camera module 180 of FIG. 1), and may receive information about the object or the environment from an external electronic device (e.g., the electronic device 102 or 104 or the server 108 of FIG. 1) through a network (e.g., the first network 198 or the second network 199 of FIG. 1). In another embodiment, the wearable electronic device 200 may provide the user with the information about the object or the environment by sound or visually. For example, the wearable electronic device 200 may provide the information about the object or the environment in a visual form to the user through a display member 201 by using a display module (e.g., the display module 160 of FIG. 1). The wearable electronic device 200 may implement augmented reality (AR) by implementing the information about the object or the environment in a visual form (e.g., hereinafter, referred to as an `AR object') and combining the AR object with a real image (or video) of the surroundings of the user. The display member 201 may provide the information about the object or the environment around the user by outputting a screen in which the AR object is added to the real image (or video) of the surroundings of the user.

In the following detailed description, various references may be made to "a state or position in which an electronic device or a specified component of the electronic device faces the user's face", and it is to be noted that this is based on the premise of a state in which the user wears the wearable electronic device 200.

According to an embodiment, the wearable electronic device 200 may include at least one display member 201, a frame 202, and a wearing member 203. In various embodiments, the wearing member 203 may be regarded as a part of the frame 202, in which case features of the wearing member 203 may be regarded as features of the frame 202. The display member 201 may be provided as a pair of a first display member and a second display member corresponding to both eyes of the user, so that when the wearable electronic device 200 is worn on the user's body, the first display member and the second display member are disposed to correspond to the right and left eyes of the user. According to an embodiment, the first display member and the second display member may be spaced apart from each other by a predetermined distance with a connecting member (e.g., a bridge) interposed therebetween. Although not shown in the drawings, the connecting member may be configured to adjust the separation distance between the display members in consideration of the user's head. In a certain embodiment, the wearable electronic device 200 may include a single display member 201 (e.g., goggles) corresponding to the right and left eyes.

According to an embodiment, the display member 201, which is a component providing visual information to the user, may include, for example, a module equipped with a lens, a display, and/or a touch circuit. Each of the lens and the display may be formed to be transparent or translucent. In another example, the display member 201 may include a window member, and the window member may be glass made of a translucent material or a member whose light transmittance is adjustable through adjustment of a color concentration. In another example, the display member 201 may include a lens including a waveguide or a reflective lens, and may provide visual information to the user by forming an image output from an optical output device (e.g., a projector) on each lens. For example, the display member 201 may refer to a display which includes a waveguide (e.g., a light waveguide) on at least a part of each lens, transmits an image (or light) output from an optical output device to the user's eyes through the waveguide included in the display member 201, and at the same time, transmits or provides a real world (e.g. a view of the real world, such as the environment around a user or within a field of view of the user) to the user's eyes through the area, i.e. through an area of the display member 201, in a see-through manner.

According to an embodiment, the waveguide may include glass, plastic, or a polymer, and include a grating structure on at least a part (inside or outside) of the waveguide. For example, the grating structure may be formed in a polygonal or curved shape and include a nano pattern. For example, a traveling direction of light transmitted from the optical output device and/or the user may be changed by the nano pattern.

According to an embodiment, the display member 201 may include the first surface F1 facing outward (e.g., the Y direction), and the second surface F2 facing a direction

(e.g., the +Y direction) opposite to the first surface F1, when the user wears the wearable electronic device 200. In certain examples where the display member 201 comprises a pair of a first display member and a second display member, it will be appreciated that each of the first and second display members includes a first surface F1 facing outward (e.g. in the -Y direction) and a second surface F2 facing inward (e.g., the +Y direction, being a direction opposite to that in which the first surface faces), when the wearable electronic device 200 is worn by a user. While the electronic device 200 is worn by the user, the second surface F2 of the display member 201 may be disposed to face the user's left eye and/or right eye, and at least partially transmit light or an image incident through the first surface F1 to the user's left eye and/or right eye. According to an embodiment, the frame 202 may be a structure at least partially surrounding the periphery of the display member 201 to fix at least a part of the display member 201, and correspond to a rim portion of glasses. The frame 202 may be supported or located on the user's face, while the user wears the wearable electronic device 200. For example, the frame 202 may position at least one of the display members 201 to correspond to the user's naked eye. According to an embodiment, the frame 202 may serve as the rim of a general glasses structure. In an embodiment, the frame 202 may at least partially include a material having good thermal conductivity, such as a metal material. The thermal conductive material may be, for example, but not limited to, a metal material, and any material having good thermal conductivity may be used as a material for manufacturing the frame 202, even though the material is not a metal material. The frame 202 is a structure substantially exposed outward from the wearable electronic device 200, and may be easily processed or molded by including a polymer such as polycarbonate as well as a metal material having thermal conductivity. In the illustrated embodiment, the frame 202 may have a closed curve shape surrounding the display member 201.

According to an embodiment, the frame 202 may be formed by combining at least two frames. For example, the frame 202 may include a first frame 202a and a second frame 202b. According to the embodiment illustrated in FIG. 2, when the wearable electronic device 200 is worn by the user, the first frame 202a may form a frame structure of a part facing the user's face, and the second frame 202b may form a frame structure of a part in the user's gaze direction. However, the specific shapes of the first frame 202a and the second frame 202b and the coupling relationship between these structures may vary according to embodiments.

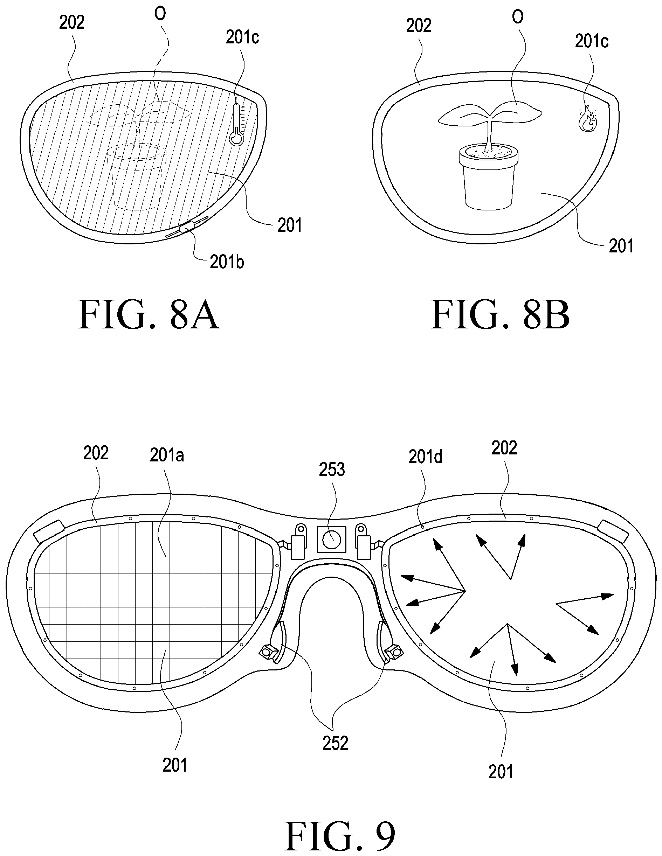

According to an embodiment, the wearable electronic device 200 may include the camera module 251 (e.g., the camera module 180 of FIG. 1) and/or a sensor module 253 (e.g., the sensor module 176 of FIG. 1) disposed on the frame 202. A flexible printed circuit board (FPCB) 205 may electrically connect the camera module 251 and/or the sensor module 253 to a circuit board 241 (e.g., a printed circuit board (PCB), a printed board assembly (PBA), an FPCB, or rigid-FPCB (RFPCB)) accommodated in the wearing member 203. The camera module 251 may obtain an image of a surrounding object or environment through a first optical hole 221 formed in the frame 202. The camera module 251 and/or the first optical hole 221 may be disposed at each of both side ends of the frame 202 (e.g., the second frame 202b), for example, at each of both ends of the frame (e.g., the second frame 202b) in the X direction. A processor (e.g., the processor 120 of FIG. 1) of the electronic device 200 may recognize an object or an environment based on an image obtained through the camera module 251. In a certain embodiment, the wearable electronic device 200 (e.g., the processor 120 or the communication module 190 of FIG. 1) may request information about the image obtained through the camera module 251 by transmitting the image to an external electronic device (e.g., the electronic device 102 or 104 or the server 108 of FIG. 1) through the camera module 251. Additionally or alternatively to the above-described camera module or sensor module, the wearable electronic device 200 may include other camera modules or sensor modules not shown in FIGS. 2 and 3. For example, an embodiment of including an eye tracking camera module 252 in the wearable electronic device 200 in addition to the afore-described camera module or sensor module 253 may be disclosed in the embodiment illustrated in FIG. 9 to be described later.

According to an embodiment, the FPCB 205 may extend from the circuit board 241 across a hinge structure 260 into the frame 202. According to an embodiment, the FPCB 205 may be disposed on at least a part of the periphery of the display member 201 inside the frame 202. For example, the camera module 251 and/or the sensor module 253 may be disposed substantially within the frame 202 by using the FPCB 205 and disposed around the display member 201.

According to an embodiment, the sensor module 253 may include a proximity sensor and be electrically connected to the circuit board 241 through the FPCB 205. The sensor module 253 may detect whether the user's body (e.g., a finger) approaches the display member 201 or is kept close to the display member 201 within a certain distance, through a second optical hole 223 formed in the second frame 202b. The sensor module 253 and/or the second optical hole 223 may be disposed between camera modules 251 in a central part of the frame 202, for example, between the camera modules 251 in the X direction. While in this embodiment, the wearable electronic device 200 is configured to include one sensor module 253 (e.g., a proximity sensor) and one second optical hole 223, to which the disclosure is not limited, the number and/or positions of sensor modules 253 and second optical holes 223 may be variously changed in order to more accurately detect approach or proximity of the user's body.

According to an embodiment, when approach of the user's body is detected through the sensor module 253 (e.g., the proximity sensor), the processor (e.g., the processor 120 of FIG. 1) may be configured to perform a specified function. In a certain embodiment, when approach of the user's body is detected, the processor 120 may store an image obtained through the camera module 251. For example, according to an operation mode of the wearable electronic device 200, the processor 120 may execute various functions based on a signal sensed through the proximity sensor (e.g., the sensor module 253). In a certain embodiment, the sensor module 253 may include an eye tracking sensor (not shown). For example, the wearable electronic device 200 may track the user's gaze (e.g., a pupil) by including the eye tracking sensor, and adjust the position and/or size of an image output through the display module (e.g., the display module 160 of FIG. 1) and provided to the user according to the user's gaze. For example, the eye tracking sensor may include at least one of a vertical cavity surface emitting laser (VCSEL), an IR sensor, and/or a photodiode. For example, the photodiode may include a positive intrinsic negative (PIN) photodiode or an avalanche photodiode (APD). The photodiode may be referred to as a photo detector or a photo sensor. For example, in the embodiment of FIG. 9 to be described later, the wearable electronic device 200 may include a plurality of IR LEDs arranged along the frame 202, spaced apart from each other by a predetermined distance, as the eye tracking sensor.

In a certain embodiment, the sensor module 253 may include an illuminance sensor (not shown). For example, the illuminance sensor may be a sensor detecting an illuminance (or brightness) around the user's eyes or the wearable electronic device 200, and the wearable electronic device 200 may control the optical output device based on the illuminance (or brightness) detected through the illuminance sensor.

According to an embodiment, the camera module 251 may be replaced with the sensor module 253, or conversely, the sensor module 253 may be replaced with the camera module 251. According to an embodiment, the camera module 251 and/or the sensor module 253 may be provided at a position different from the position illustrated in FIGS. 2 and 3 in the frame 202. Further, the wearable electronic device 200 may include more camera modules and/or sensor modules in addition to the camera module 251 and/or the sensor module 253 illustrated in FIGS. 2 and 3. Although not shown in the drawing, the wearable electronic device 200 may further include an eye tracking camera and/or a gesture detecting camera disposed on the frame 202.

According to an embodiment, the wearable electronic device 200 may include at least one light emitting unit in an area adjacent to the camera module 251. According to an embodiment, the light emitting unit may emit light in a visible light band or an IR band. According to an embodiment, the light emitting unit may include an LED. For example, the light emitting unit may provide a light source interlocked with state information about the wearable electronic device 200 and/or an operation of the camera module 251 under the control of a lighting device driver.

According to an embodiment, the wearable electronic device 200 may include a pair of wearing members 203 corresponding to temples of glasses. For example, the pair of wearing members 203 may include a first wearing member and a second wearing member. The pair of wearing members 203 may extend from the frame 202 and be partially supported or positioned on the user's body (e.g., ears), together with the frame 202. In various embodiments, the wearable electronic device 200 may include one wearing member 203, for example such as in a case where a wearing member 203 extends from a part of the frame 202 on one side (e.g. corresponding to one temple of a pair of glasses), wrap around the back of the user's head, and join another part of the frame 202 on the other side (e.g., corresponding to the other temple of a pair of glasses). In another example, a pair of wearing members 203 may be regarded as a singular wearing member 203 in view of being connected via the frame 202. In an embodiment, the wearing members 203 may be pivotably coupled with the frame 202 through the hinge structure 260 corresponding to the end pieces of glasses. When not wearing the wearable electronic device 200, the user may fold the wearing members 203 overlappingly with the frame 202 and conveniently carry or store the wearable electronic device 200. For example, the wearing members 203 may be folded towards one another (e.g., inwards) such that the wearing members 203 are orientated substantially in parallel with the frame 202 in the X direction. A part of the hinge structure 260 may be mounted on the frame 202, and another part thereof may be accommodated or mounted into the wearing member 203. For example, for each wearing member 203, another part of the hinge structure 260 (i.e., a different part for each wearing member 203) may be accommodated or mounted into said wearing member 203, with a part of hinge structure 260 mounted on the frame 202. A hinge cover 227 may be mounted on the frame 202 to conceal a part of the hinge structure 260, and another part of the hinge structure 260 may be accommodated or concealed between an inner case 231 and an outer case 233, which will be described later. The hinge structure 260 may include a first hinge structure 261 that pivotably connects the frame 202 to the first wearing member, and a second hinge structure 262 that pivotably connects the frame 202 to the second wearing member.

According to an embodiment, the wearable electronic device 200 may include at least one electronic component located on a wearing member 203, for example, the circuit board 241, a battery 243, a display module (e.g., the display module 160 of FIG. 1), and/or a speaker module 245. At least one electronic component accommodated in the wearing member 203 may be electrically connected through a circuit board (e.g., the circuit board 241), an FPCB (e.g., FPCB 205), a conductive cable, or a connector.

According to an embodiment, the circuit board 241 may include a first circuit board 241a and a second circuit board 241b respectively disposed on the pair of wearing members 203. The wearable electronic device 200 may further include other circuit boards not shown in the drawings. For example, the wearable electronic device 200 may further include at least one auxiliary circuit board that assists the first circuit board 241a and/or the second circuit board 241b. According to an embodiment, various electronic components included in the wearable electronic device 200 may be disposed on the first circuit board 241a and/or the second circuit board 241b, and some electronic components may also be disposed on the auxiliary circuit board(s).

According to an embodiment, the, or each, wearing member 203 may include the inner case 231 and the outer case 233. The inner case 231 is, for example, a case configured to directly contact the user's body and may be made of a material having low thermal conductivity, for example, a synthetic resin. The outer case 233 may include, for example, a material capable of at least partially transferring heat (e.g., a metal material) and be coupled with the inner case 231, facing the inner case 231. In an embodiment, the circuit board 241 or the speaker module 245 may be accommodated in a space separated from the battery 243 within the wearing member 203. In the illustrated embodiment, the inner case 231 may include a first case 231a including the circuit board 241 or the speaker module 245 and a second case 231b accommodating the battery 243. The outer case 233 may include a third case 233a coupled with the first case 231a, facing the first case 231a, and a fourth case 233b coupled with the second case 231b, facing second case 231b. For example, the first case 231a and the third case 233a (hereinafter, referred to as a 'first case part 231a and 233a') may be coupled with each other to accommodate the circuit board 241 or the speaker module 245. In addition, the second case 231b and the fourth case 233b (hereinafter, referred to as a 'second case part 231b and 233b') may be coupled with each other to accommodate the battery 243. According to another embodiment, the wearable electronic device 200 may further include a wire 246 to electrically connect the circuit board 241 and the battery 243 located on the wearable member 203.

According to an embodiment, the first case part 231a and 233a may be pivotably coupled with the frame 202 through the hinge structure 260, and the second case part 231b and 233b may be connected to an end portion of the first case part 231a and 233a directly or through a connecting member 235. In a certain embodiment, a part of the connecting member 235 that comes into contact with the user's body may be made of a material with low thermal conductivity, for example, an elastic material such as silicone, polyurethane, or rubber. A part that does not come into contact with the user's body may be made of a material with high thermal conductivity (e.g., a metal material). For example, when heat is generated from the circuit board 241 or the battery 243, the connecting member 235 may block transfer of heat to the part contacting the user's body and distribute or discharge the heat through the part that does not contact the user's body. In a certain embodiment, the part of the connecting member 235 configured to come into contact with the user's body may be interpreted as a part of the inner case 23 1, and the part of the connecting member 235 that does not contact the user's body may be interpreted as a part of the outer case 233.

The frame (e.g., the frame 202 of FIG. 2) may include the connecting member (e.g., the connecting member 254 of FIG. 3) between the pair of display members (the first display member and the second display member). The connecting member of the frame may be a part corresponding to a nose support holder of glasses.

According to an embodiment of the disclosure, various components included in the wearable electronic device 200 may be distributed on one side and the other side of the wearable electronic device 200, substantially symmetrically with respect to an imaginary line A-A' separating the pair of display members (the first display member and the second display member) to the left and the right.

Referring to FIG. 3, the wearable electronic device 200 according to an embodiment of the disclosure may include a first heat transfer member 280 and a second heat transfer member 290. As the wearable electronic device 200 according to an embodiment of the disclosure includes the first heat transfer member 280 and the second heat transfer member 290, fogging that is likely to be generated or is generated by the display member 201 despite the absence of a separate heat source may be removed, reduced, and/or prevented.

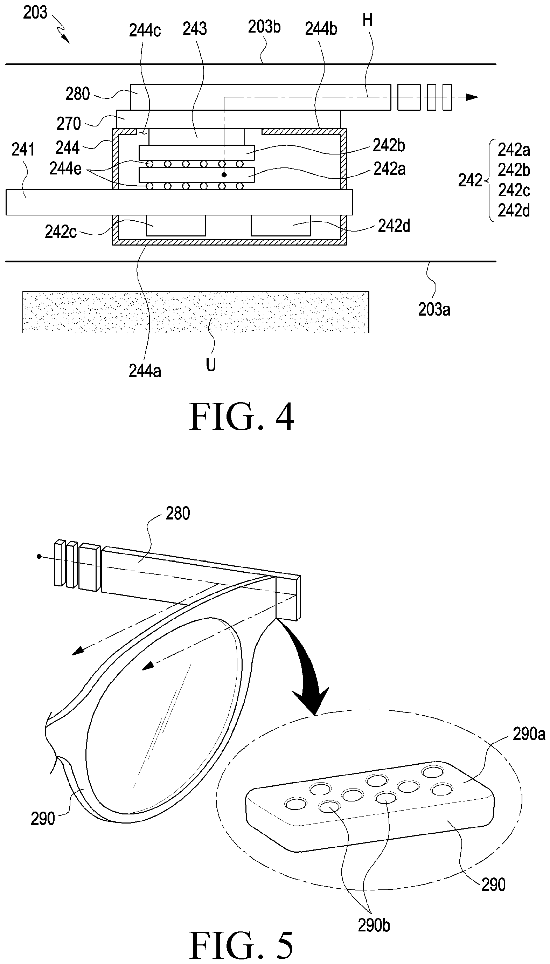

FIG. 4 is a diagram illustrating a PCB and its peripheral components in a wearable electronic device according to an embodiment of the disclosure. It will be appreciated that, although FIG. 4 shows one wearing member 203, if the wearable electronic device 200 comprises a pair of wearing members 203 then, for each wearing member 203, a configuration such as that shown/described in relation to FIG. 4 may be provided.

In an embodiment, at least one integrated circuit (IC) chip may be mounted as an example of at least one electronic component 242 on the circuit board 241, and a circuit device such as the processor 120, the communication module 190, the power management module 188, or the memory 130 may be provided on the IC chip. In addition, the at least one electronic component may include, for example, at least one of a communication device, a processor, memory, a radio frequency front end (RFFE), an RF transceiver, a power management module, a wireless communication circuit, and/or an interface. The processor may include, for example, at least one of a CPU, an AP, a GPU, an image signal processor, a sensor hub processor, or a CP. According to an embodiment, the processor may include at least a CP, or may be an integrated configuration of an AP and a CP. The processor may control or drive the RF transceiver, the power management module, or the wireless communication circuit. An electronic component module may include a plurality of electronic components or devices for implementing at least one function.

Referring to FIG. 4, the at least one electronic component 242 accommodated in the wearing member 203 may be disposed on at least one surface of the circuit board 241. According to an embodiment, the at least one electronic component 242 may be disposed on one surface of the circuit board 241 (e.g., 242a and 242b) or on the other surface of the circuit board 241 (e.g., 242c and 242d). The types and shapes of electronic components disposed on the circuit board 241 are not limited to any specific ones. When the at least one electronic component 242 includes a plurality of electronic components, some of the electronic components may be stacked with each other by solder balls 242e. Hereinafter, electronic components 242a and 242b disposed on one surface of the circuit board 241 will be mainly described, as an example of the at least one electronic component 242. The electronic components 242a and 242b disposed on one surface of the circuit board 241 may include an AP 242a having a high heating temperature within the wearable electronic device 200, and the wearable electronic device 200 may remove, reduce, and/or prevent fogging on the display member 201 by using the AP 242a without a separate heat source.

Referring to FIG. 4, the wearing member 203 may include a first surface 203a facing the first direction (e.g., the -Z direction) and a second surface 203b facing the second direction (e.g., the +Z direction) opposite to the first direction. Although not shown in the drawings, the wearing member 203 may further include a third surface facing a third direction different from the first and second directions and surrounding an inner space between the first and second surfaces. According to an embodiment, the first surface 203a may correspond to the first case part 231a and 233a described above with reference to FIG. 2, and the second surface 203a may correspond to the second case part 231b and 233b described above with reference to FIG. 2. According to an embodiment, the first surface 203a of the wearing member 203 may come into contact with a body part (e.g., the head) of a user U. According to an embodiment, the first heat transfer member 280 may be disposed on the wearing member 203 and disposed closer to the second surface 203b than to the first surface 203a. Accordingly, it is possible to prevent transfer of high-temperature heat to the user U, when heat is transferred through the first heat transfer member 280.

According to an embodiment of the disclosure, the first heat transfer member 280 may be disposed at a position adjacent to the electronic component 242a, for example, the AP. Heat generated from the electronic component 242a may be effectively dissipated by using the first heat transfer member 280. Referring to FIG. 4, the first heat transfer member 280 may be indirectly connected to the electronic component 242a through another member. For example, at least one of another electronic component 242b, a heat transfer member 243, and/or a shielding film 270 may be disposed between the first heat transfer member 280 and the electronic component 242a.

At least a part of the first heat transfer member 280 may face a surface to which heat is radiated from the electronic component 242a. For example, the first heat transfer member 280 may be formed as a vacuum chamber. In this case, the first heat transfer member 280 may receive high-temperature heat H from the electronic component 242a. Because the inside of the first heat transfer member 280 is in a vacuum, the heat H transferred from the electronic component 242a may rapidly diffuse toward the frame 202. However, the type of the first heat transfer member 280 is not limited. For example, the first heat transfer member 280 may include various heat transfer materials or members such as one or more of a heat pipe, a graphene sheet, a graphite sheet, a solid phase thermal sheet such as a metal (e.g., copper) sheet, or a liquid phase heat transfer paint, in addition to or as an alternatives to a vacuum chamber. Heat transfer by various heat transfer materials or members may include at least some of various energy transfer forms including heat conduction, heat spreading, heat diffusion, or heat transfer.

According to an embodiment, the at least one electronic component 242 may be at least partially surrounded by a shielding member 244 and/or the shielding film 270. The shielding member 244 may include a first surface 244a and a second surface 244b facing an opposite direction of the first surface 244a, and an opening 244c may be formed on the second surface 244b. According to an embodiment, the heat transfer member 243 may be further provided separately in the opening 244c. The heat transfer member 243 may correspond to at least one of a carbon fiber thermal interface material (TIM), a liquid phase thermal interface material (TIM), an acrylic thermal interface material (TIM), and/or a solid phase thermal interface material (TIM). Heat generated from the at least one electronic component 242 and generated and/or accumulated inside a space at least partially surrounded by the shielding member 244 and/or the shielding film 270 may be transferred toward the first heat transfer member 280 by using the heat transfer member 243.

Regarding a heat transfer path illustrated in FIG. 4, for an example, the heat H generated from the at least one electronic component 242 (e.g., the AP 242a) may pass through another electronic component (e.g. 242b) stacked by solder balls 242e (or other stacking means) and the heat transfer member 243, pass through the shielding film 270, reach the first heat transfer member 280, and then diffuse along a length direction of the first heat transfer member 280. Since the first heat transfer member 280 extends from a position adjacent to the at least one electronic component 242 toward the frame, the length direction of the first heat transfer member 280 may correspond to the -Y direction. In some examples, it may be considered that the heat H diffuses along a long axis direction of the first heat transfer member 280, corresponding to the -Y direction when the wearable electronic device 200 is in an unfolded state.

FIG. 5 is a diagram illustrating a path through which heat is transferred and moved between a first heat transfer member and a second heat transfer member according to an embodiment of the disclosure.

The second heat transfer member 290 is a component that transfers the heat H received from the first heat transfer member 280 to the display member 201, and may be disposed on the frame 202. According to an embodiment, the second heat transfer member 290 may be disposed to at least partially overlap with the frame 202 and at least partially surround the display member 201. Referring to FIG. 5, although the first heat transfer member 280 and the second heat transfer member 290 are shown as thin rods extending linearly, this does not necessarily limit the disclosure. For example, the first heat transfer member 280 and the second heat transfer member 290 may partially include curved surfaces. Additionally, in various embodiments, the first heat transfer member 280 and the second heat transfer member 290 may be regarded as a single heat transfer member. For example, a single heat transfer member of a flexible material may be provided, where the flexibility allows for folding of a first part of the single heat transfer member, corresponding to the first heat transfer member 280, with respect to a second part of the single heat transfer member, corresponding to second heat transfer member 290. the heat may flow from the first part to the second part (with greater heat transfer occurring in when the wearable electronic device 200 is in the unfolded state).

As described above through the embodiments of FIGS. 2 and 3, the wearing member 203 may be configured to be foldable with respect to the frame 202 by using the hinge structure 260 provided on one side of the frame 202. The second heat transfer member 290 according to an embodiment of the disclosure may or may not come into contact with the first heat transfer member 280 based on a folding or unfolding operation of the hinge structure 260. In the embodiment of FIG. 5, the first heat transfer member 280 and the second heat transfer member 290 are in contact, and the heat H transferred through the first heat transfer member 280 may rapidly diffuse to the frame 202 through the second heat transfer member 280, when the second dissipation member 290 and the first heat transfer member 280 contact each other.

According to an embodiment, a part of the second heat transfer member 290 contactable with the first heat transfer member 280 may at least partially include an elastic material. At least a part of the second heat transfer member 290 may be formed of a heat spring including an elastic material. For example, as illustrated in FIG. 5, a plurality of elastic contact points 290b may be formed on a contact surface 290a of the second heat transfer member 290, which contacts the first heat transfer member 280. For example, the second heat transfer member 290 may include a material that has anisotropy and excellent thermal diffusion and provides elasticity, such as a carbon nanotube polymer composite. As the second heat transfer member 290 includes an elastic material, the second heat transfer member 290 may increase the durability and working endurance term of the fogging removal, reduction, and/or prevention structure of the wearable electronic device 200, despite repeated contact and/or non-contact operations with the first heat-dissipation member 280 (e.g., due to changing the wearable electronic device 200 from the unfolded state to a folded state, and *vice versa*).

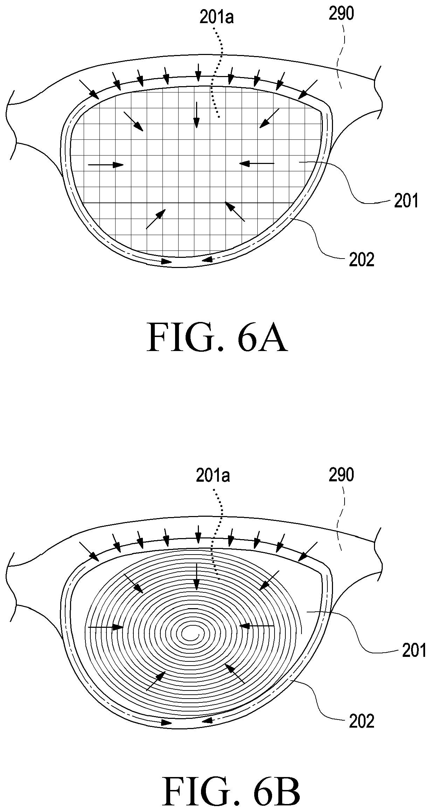

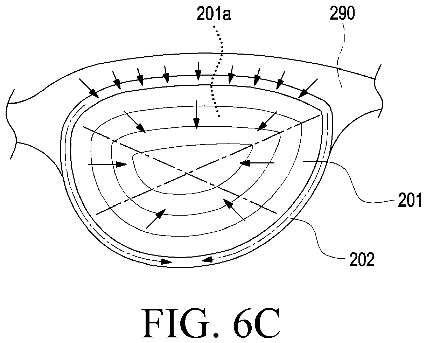

FIG. 6A is a diagram illustrating a path through which heat is transferred and moved between a second heat transfer member and a display member according to an embodiment. FIG. 6B is a diagram illustrating a path through which heat is transferred and moved between a second heat transfer member and a display member according to an embodiment. FIG. 6C is a diagram illustrating a path through which heat is transferred and moved between a second heat transfer member and a display member according to an embodiment.

According to an embodiment, the second heat transfer member 290 may be configured to elongate from one side of the frame 202 to the other side thereof. In the embodiment illustrated in FIG. 5, the second heat transfer member 290 has, but not limited to, a rod shape extending in a straight line. As illustrated in FIGS. 6A to 6C, the second heat transfer member 290 may be formed to include a curve in whole or in part. Referring to FIGS. 6A to 6C, heat H transferred to the second heat transfer member 290 may reach the surroundings of the display member 201, and be transferred toward the inside of the display member 201, for example, the center of the display member 201 through a heat conductor 201a included in the display member 201. In the wearable electronic device 200 of the disclosure, as the heat H generated from at least one electronic component is transferred to the inside of the display member 201, fogging that may be formed on the surface of the display member 201 due to a temperature difference between the display member and the surroundings of the display member may be removed, reduced, and/or prevented. According to another embodiment, the heat H transferred to the second heat transfer member 290 may reach the surroundings of the display member 201 and then move along the frame 202. Additionally or alternatively, the heat transferred to the frame 202 may be transferred toward the center of the display member 201. A conductive wire may be provided in the frame 202, and the heat H transferred to the second heat transfer member 290 may be diffused to the display member 201 and/or the surroundings of the display member 201, thereby removing, reducing, and/or preventing fogging.

The display member 201 may include the heat conductor 201a, and the shape of the heat conductor 201a may vary according to embodiments. The heat conductor 201a may be implemented as a conductive wire or as a transparent electrode. For example, the display member 201 may include a grid-patterned heat conductor 201a, as illustrated in FIG. 6A. In another example, the display member 201 may include a spiral-shaped heat conductor 201a, as illustrated in FIG. 6B. The shape of the heat conductor included in the display member 201 is not limited to the embodiments illustrated in FIGS. 6A and 6B. For example, instead of the spiral heat conductor 201a wound with a large number of turns illustrated in FIG. 6B, a plural of spiral heat conductors 201a each wound with a smaller number of turns may be provided in the display member 201. In another example, the display member 201 may include a plurality of concentric heat conductors 201a, as illustrated in FIG. 6C. According to another embodiment, although not shown in the drawing, the display member 201 may be configured in a combination of a grid-patterned heat conductor, a spiral-shaped heat conductor, and a concentric heat conductor.

According to an embodiment, the heat conductor 201a included in the display member 201 may be formed on the whole area of the display member 201, or on a partial area thereof. In the display member 201, fogging may occur more at a specific location. For example, fogging of the display member 201 may occur mainly at a lower end of the display member 201 disposed adjacent to the user's nose, when the user may wear the wearable electronic device 200. In this regard, the heat conductor 201a included in the display member 201 may be disposed mainly on a local area of the display member 201 (e.g., the lower end of the display member 201) in consideration of a location where fogging frequently occurs.

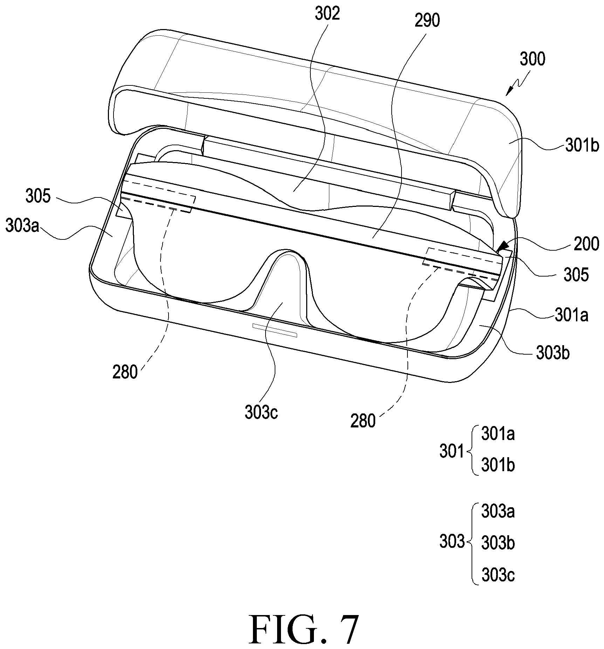

FIG. 7 is a diagram illustrating a wearable electronic device seated in a case housing according to an embodiment of the disclosure.

In the embodiment of FIG. 7, the first heat transfer member 280 and the second heat transfer member 290 are not in contact (e.g. the wearable electronic device 200 is in a folded state), and heat H transferred through the first heat transfer member 280 may diffuse toward a case housing 301 without passing through the second heat transfer member 290.

According to various embodiments, the electronic device case 300 may include a case housing 301 including a first cover 301a (or a first half shell) and a second cover 301b (or a second half shell) rotatable (or foldable) with respect to the first cover 301a.

According to various embodiments, the case housing 301 may be formed to surround at least a part of the wearable electronic device 200. When the electronic device case 300 is in a closed state, the case housing 301 may have the first cover 301a and the second cover 301b facing each other, and form a space for accommodating at least a part of the wearable electronic device 200 inside the case housing 301.

According to various embodiments, a seating portion 302 for seating at least a part of the wearable electronic device 200 may be formed in the first cover 301a. The seating portion 302 may be formed in the first cover 301a so that at least a part of the wearable electronic device 200 may be accommodated in the space, while being seated in the seating portion 302. According to another embodiment, the first cover 301a may include a mounting portion 303 for mounting at least a part of the wearable electronic device 200. The mounting portion 303 may include, for example, a nose support holder 303c corresponding to the connecting member 254 of the wearable electronic device 200 and hinge holders 303a and 303b corresponding to a hinge structure part (e.g., the hinge structure 260 of FIG. 3) of the wearable electronic device 200. The nose support holder 303c may protrude from a central portion of the seating portion 302, and the hinge holders 303a and 303b may protrude from edges of the seating portion 302 to be formed stepwise.

According to various embodiments, in a situation where the second cover 301b rotates with respect to the first cover 301a and faces at least a part of the first cover 301a, the cover may close the space in which the wearable electronic device 200 is accommodated.

According to an embodiment, when the wearable electronic device 200 is mounted in the case housing 301, the wearing member 203 of the wearable electronic device 200 folded with respect to the frame 202 may be seated in the seating portion 302 of the case housing 300. The first heat transfer member 280 may also be folded with respect to the frame 202 by the hinge structure 260. According to an embodiment, the first heat transfer member 280 may be folded in a direction substantially parallel to the second heat transfer member 290. In this state, heat transferred to the first heat transfer member 280 may be dissipated toward the case housing 301. Contact portions 305 contactable with the first heat transfer member 280 may be formed in the hinge holders 303a and 303b of the case housing 301 to discharge heat of the first heat transfer member 280 toward the case housing 301.

The wearable electronic device 200 according to an embodiment of the disclosure may dissipate heat through the first heat transfer member 280 and the case housing 301 in the folded state of the wearing member 203 with respect to the frame 202 as well as through the second heat transfer member 290 and the display member 201 in the unfolded state of the wearing member 203 with respect to the frame 202, thereby providing an effective heat transfer structure.

FIG. 8A is a diagram illustrating a state in which fogging occurs in a display member according to an embodiment of the disclosure. FIG. 8B is a view illustrating a state in which fogging generated in a display member has been removed according to an embodiment of the disclosure.

The wearable electronic device 200 may include a processor (e.g., the processor 120 of FIG. 1 and the processor 242a of FIG. 4), and the processor may determine whether fogging has occurred based on temperature measured in or around the display member 201 and control heat generation of the display member 201.

FIG. 8A illustrates a state in which fogging occurs on the display member 201 and thus an object O appears blurry. For example, when the user enters a warm indoor environment from outdoors in winter, the wearable electronic device 200 which has been cooled outdoors may be exposed to the warm environment around the wearable electronic device 200. In this case, water vapor in indoor air may be liquefied around the cool wearable electronic device 200, thereby causing fogging. Alternatively, when the user wears the wearable electronic device 200, the display member 201 may be exposed to a high-temperature and high-humidity environment due to breath of the user (e.g., if the user is wearing a mask or the like), and vapor from the breath may be liquefied around the display member 201 at a relatively low temperature. In this environment, the wearable electronic device 200 may remove, reduce, and/or prevent the fogging by controlling heat transferred to the display member, for example, heat originating from the processor 242a.

The wearable electronic device 200 may include at least one temperature sensor 201b (e.g., a thermistor) capable of measuring a temperature in or around the wearable electronic device 200. The processor 242a may determine a current temperature of the display member 201 based on temperature information measured by the at least one temperature sensor 201b, and accordingly determine whether fogging has occurred. According to an embodiment, the temperature of the display member 201 may be displayed as an icon 201c in an area of the display member 201. Fogging of the display member 201 may be removed, reduced, and/or prevented by raising the temperature of the display member 201 as described above with reference to the embodiments of FIGS. 4 to 7.

FIG. 8B illustrates a state in which the object O is clearly visible as the fogging generated in the display member 201 is removed or reduced. The processor 242a may control the amount of heat generated in the display member based on temperature information measured by the at least one sensor 201b. According to an embodiment, the temperature of the display member 201 may be displayed as the icon 201c in an area of the display member 201, and a heating state or a non-heating state may also be displayed.

The processor 242a may remove and/or reduce fogging by raising the temperature of the processor 242a, when the fogging occurs. Further, the fogging may be prevented by raising the temperature of the processor 242a in advance before the fogging occurs. For example, in a passive mode, the wearable electronic device 200 may always transfer heat generated from the at least one electronic component 242 (e.g., the processor 242a) disposed on the circuit board 241 toward the display member 201 through the first heat transfer member 280 regardless of whether the user wears the wearable electronic device 200 and/or regardless of information about a temperature difference between the display member 201 and the surroundings of the display member 201, and maintain the temperature in the display member 201 or around the display member 201 (e.g., the temperature of the frame 202) constant, thereby preventing fogging in advance.

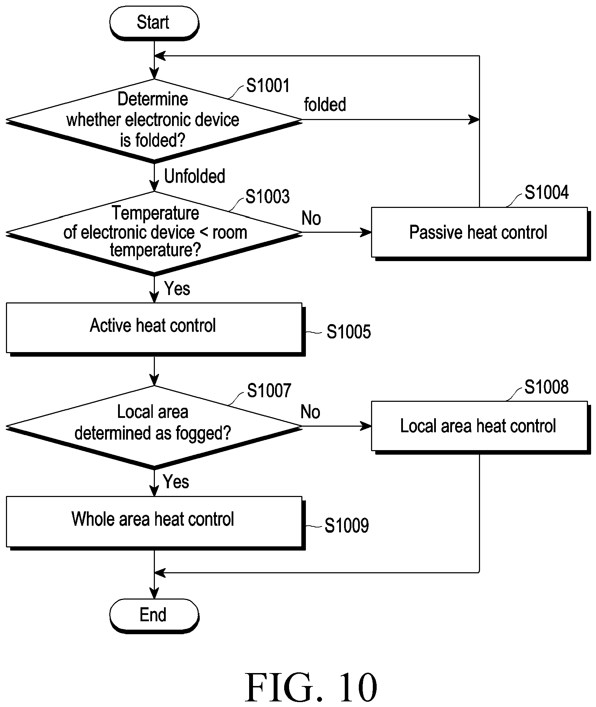

The processor 242a may remove, reduce, and/or prevent fogging by not only maintaining the temperature of the display member 201 or its surroundings constant (or substantially constant) but also detecting the temperature of the display member 201 or its surroundings in real time and controlling heat generated by the processor 242a to adjust the amount of heat transferred to or around the display member 201 (e.g., the frame 202). The method of controlling heat generation of the processor 242a may include a method of increasing a temperature in the processor 242a, for example, a method of increasing a clock number of the processor 242a during a specified time. The specified time may increase proportionally as the temperature of the display member 201 or its surroundings decreases. In addition, various methods of controlling heat generation of the processor 242a may be applied. According to an embodiment, the wearable electronic device 200 may actively remove, reduce, and/or prevent fogging by using an active heat control operation of the processor 242a. The `active heat control operation' will be described in more detail with reference to the embodiments of FIGS. 9 and 10 below.

FIG. 9 is a diagram illustrating a method of transferring heat only to a partial area of a display member according to an embodiment of the disclosure.

The processor 242a may perform an active heat control operation based on a detected temperature difference between the wearable electronic device 200 and its surrounding environment. For example, the active heat control operation may include a local heating operation (e.g., local mode) for a partial area of the display member 201 to remove, reduce, and/or prevent fogging in the partial area of the display member 201. The local heating operation for the partial area of the display member 201 may be implemented additionally to the passive mode. For example, fogging may occur only in a partial area of the display member 201 due to breath of the user. In this case, the local heating operation may be performed on the partial area of the display member 201. A method of performing the local heating operation may be implemented by, for example, tracking the user's gaze to remove fogging where the user's gaze stays, or controlling pixels (e.g., pixel on) to transfer heat only to a heat conductor corresponding to some pixels where fogging occurs in the display member 201 (e.g., the transfer of heat to individual heat conductors may be controlled based on controlling individual pixel(s) or group(s) of pixels corresponding to a respective heat conductor).

As the active heat control operation, the wearable electronic device 200 may perform an operation of forcibly increasing (e.g., as described above) the temperature of an electronic component (e.g., the processor 242a) (e.g., performance mode). The temperature of the display member 201 may be increased more rapidly by increasing a temperature difference between the processor 242a and the display member 201 and thus increasing the amount of thermal diffusion heat. The processor 242a may more effectively remove, reduce, and/or prevent fogging by further increasing the amount of heat transferred to the display member 201 by increasing the amount of heat generated by the processor 242a.

FIG. 10 is a flowchart illustrating a method for removing, reducing, and/or preventing fogging according to an embodiment of the disclosure.

Referring to FIG. 10, an electronic device (e.g., the wearable electronic device 200) may determine whether the electronic device (e.g., the wearable electronic device 200) has been folded (operation S1001), and determine whether fogging has occurred (operation S1003). In addition, the electronic device (e.g., the wearable electronic device 200) may perform passive heat control when fogging has not occurred (including when the degree of fogging is not severe) (operation S 1004), and perform active heat control when fogging has occurred (operation S1005). Further, the electronic device (e.g., the wearable electronic device 200) may determine whether fogging has occurred in a local area of the display member 201 (operation S1007), and control heat generation for the whole area of the display member 201 (operation S1008) or control heat generation for a local area of the display member 201.

In relation to operation S1001, it may be determined whether to perform the method of removing, reducing, and/or preventing fogging according to the disclosure depending on whether the electronic device (e.g., the wearable electronic device 200) has been folded. When the electronic device is a glasses-type wearable electronic device, for example, when the electronic device has been folded, the method of removing, reducing, and/or preventing fogging according to the disclosure may not be performed because the user may not wear the electronic device. In this case, as described above with reference to FIG. 7, the heat transfer operation may be performed through the case housing 301. For example, when the electronic device is in the unfolded (or flat) state, the user may wear or be about to wear the electronic device, and thus the method of removing, reducing, and/or preventing fogging according to the disclosure may be performed. It will be appreciated that operation S 1001 may be omitted, with the performing of operation S 1003 not dependent on whether the electronic device is unfolded or folded.

In relation to operation S1003, the electronic device (e.g., the wearable electronic device 200) may remove, reduce, and/or prevent fogging based on a temperature of the electronic device (e.g., the wearable electronic device 200) and a temperature around the electronic device. The temperature of the electronic device (e.g., the wearable electronic device 200) may be measured by a temperature sensor provided in the electronic device. The temperature around the electronic device (e.g., the wearable electronic device 200) may be provided by a temperature sensor of an external electronic device (e.g., a portable terminal) or a temperature-related application (e.g., a weather or real-time temperature measurement application, such as may obtain the temperature around the electronic device from an external entity such as a server) installed in the electronic device (e.g., the wearable electronic device 200) or an external electronic device (e.g., a portable terminal), or a combination (e.g., an average) of temperatures provided by a temperature sensor and a temperature-related application. For example, when it is determined that the temperature of the electronic device (e.g., the wearable electronic device 200) is lower than the temperature around the electric device (or a room temperature), the active heat control operation may be performed on the assumption that fogging has occurred or is likely to occur. In various examples, the electronic device 200 may predict that the temperature of the electronic device 200 may be lower than the temperature around the electronic device 200 in the future and, in response, perform active heat control (e.g., to prevent or reduce fogging before it occurs). For example, the electronic device 200 may detect, using a location sensor or other means of obtaining a current location of the electronic device 200, that the electronic device 200 is approaching an indoors environment (e.g. such as an indoors environment which the electronic device 200 is aware of having previously entered, e.g. via stored location history, such as a home or office of a user). Based on an assumption that the indoors environment will be hotter than a temperature of the electronic device 200 (or based on remotely obtaining information on a temperature of the indoors environment and determining the temperature of the indoors environment to be higher than the temperature of the electronic device 200) and the assumption that the electronic device 200 will move into the indoors environment, active heat control may be performed (e.g. according to operation S1005) in advance of entering the indoors environment. Advantageously, this may prevent or reduce the occurrence of fogging in the event that the electronic device 200 enters the indoors environment.

In relation to operation S 1004, when it is determined that the temperature of the electronic device (e.g., the wearable electronic device 200) is not lower than the temperature around the electric device (or a room temperature), the electronic device (e.g., the wearable electronic device 200) may perform the passive heat control operation (S1004). The passive heat control operation may include an operation of transferring heat generated from at least one electronic component (e.g., the processor 242a) disposed on the wearing member 203 toward the display member 201 and/or the frame 202 through the first heat transfer member 280 and the second heat transfer member 290 (e.g. without actively controlling the heat transfer). The passive heat control operation may correspond to the passive mode mentioned in the description of the embodiment of FIGS. 8A and 8B. In the passive heat control operation, heat may always be transferred toward the display member 201 through the first heat transfer member 280 regardless of whether the wearable electronic device 200 is worn by the user and/or regardless of information about a temperature difference between the display member 201 and the surroundings of the display member 201. Fogging may be prevented in advance by maintaining the temperature of the display member 201 or its surroundings (e.g., the frame 202) constant. It will be appreciated that, for various example methods of the present disclosure, in view of the passivity of heat transfer in such cases (that is, where a processor (e.g., the processor 242a) of the electronic device is not actively controlling heat transfer), reference to an operation of performing passive heat control (such as operation S1004) in a case of the electronic device being folded may be omitted from such methods.

In relation to S1005, when it is determined that the temperature of the electronic device (e.g., the wearable electronic device 200) is lower than the temperature around the electronic device (e.g., the room temperature) or lower than a threshold temperature set dynamically based on the temperature around the electronic device (e.g. set as a predetermined amount (e.g., 0.25 degrees Celsius, 0.5 degree Celsius, 1 degree Celsius etc. above or below the temperature around the electronic device), the electronic device (e.g., the wearable electronic device 200) may perform the active heat control operation (S1005). The active heat control operation (S1005) may be performed by the processor (e.g., the processor 242a). According to the active heat control operation, the processor 242a may control heat generated from the processor 242a to adjust the amount of heat transferred to the display member 201 or its surroundings (e.g., the frame 202). The active heat control operation (S1005) of the processor 242a may include heat control for the whole area of the display member 201 (e.g., performance mode) (S1008) and heat control for a local area of the display member 201 (e.g., local mode) (S1009), and the heat control for the whole area (e.g., performance mode) and the heat control for the local area (e.g., local mode) may be selectively performed. Alternatively, in various examples, active heat control operation (S1005) may result in either whole area heat control (S1009) or local area heat control (S1008) being performed, without such selective performing; that is, the electronic device may be configured to perform active heat control according to a preset one of whole area heat control (S1009) or local area heat control (S1008), without performing an operation similar to operation S1007 or the like.

When a user enters high-temperature indoors while wearing an electronic device (e.g., the wearable electronic device 200) or when the user breathes out, fogging may occur only in a local area of the display member 201. In relation to operation S1007, the electronic device (e.g., the wearable electronic device 200) may monitor whether fogging is confined to a local area of the display member 201 by using the eye tracking camera module 252 and/or a gesture detecting camera (not shown) and accordingly determine whether fogging occurs only to the local area of the display member 201. When fogging has occurred in the local area, the processor 242a may determine whether fogging has occurred in the local area through recognition of the user's gaze or the user's gesture. In some cases, it may be determined whether fogging has occurred only in a local area of the display member 201 by the user's direct input or manipulation of the electronic device (e.g., the wearable electronic device 200). For example, if a display member 201 comprises a touch circuit or provides touch input interface functionality (e.g., implements a touchscreen or the like), a user may perform a touch on an area of the display member 201 which is fogged or misted. The electronic device 200 may detect the touched area as a fogged area, or the user may indicate to the electronic device 200, e.g. via another input, that the touched area is a fogged area.

In relation to operation S1008, when it is determined that fogging has occurred in (e.g. only in a local area) a local area (or local areas) of the display member 201, heat may be transferred intensively only to the area(s) where fogging has occurred in the display member 201. According to an embodiment, the local area where fogging has occurred may be heated by activating pixels of the display member 201 (e.g., pixel on) only in the local area. According to another embodiment, only the local area where fogging has occurred may be heated by using the eye tracking camera. For example, the eye tracking camera may include an IR LED. This may be a method of heating by activating (turning on) the IR LED. In the above-described embodiments, a hot image such as fire may be output on the display member 201 so that the user may recognize that heating of the local area is in progress.

In relation to operation S1009, when it is determined that fogging has not occurred only in the local area of the display member 201 or that fogging occurs in a total area of the display member 201 which is greater than a predetermined percentage or threshold (e.g., more than 50%, 70%, 85% of the display member 201 is detected to be fogged), a heating operation may be performed for the whole area of the display member 201. The heating operation for the whole area of the display member 201 may include an operation forcibly increasing the temperature of the electronic component (e.g., the processor 242a) described above in the embodiment of FIGS. 8A and 8B (e.g., performance mode). The processor 242a may increase a temperature difference between the electronic component (e.g., the processor 242a) and the display member 201 and thus increase the amount of thermal diffusion, thereby increasing the temperature of the display member 201 more rapidly and removing, reducing, and/or preventing fogging more effectively. The above-described operation may be suitable for removing, reducing, and/or preventing fogging, when the electronic device (e.g., the wearable electronic device 200) is placed in a very low-temperature environment.

As described above, the disclosure may provide a method of effectively removing, reducing, and/or preventing fogging without a separate heat source and under various user conditions.

The electronic device according to an embodiment of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that an embodiment of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "A and/or B", "at least one of A or B", "A, B, or C", "A, B and/or C", "at least one of A, B, and C", and "at least one of A, B, or C", may include any one of, or all possible combinations of the items enumerated together in a corresponding one of the phrases. As used herein, such terms as "1^{st}" and "2^{nd}", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with an embodiment of the disclosure, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example, according to an embodiment, the module may be implemented in a form of an application-specific integrated circuit (ASIC).

An embodiment of the disclosure as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to an embodiment of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities, and some of the multiple entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to an embodiment, operations performed by the module, the program, or another component may be carried out sequentially, in parallel, repeatedly, or heuristically, or one or more of the operations may be executed in a different order or omitted, or one or more other operations may be added.

According to an embodiment of the disclosure, the wearable electronic device 101 or 200 may include: the display member 201 including the heat conductor 201a at least partially disposed thereon; the processor 242a; the first heat transfer member 280 disposed adjacent to at least one electronic component; and the second heat transfer member 290 transferring heat from the first heat transfer member toward the display member. The processor may be configured to determine whether fogging occurs based on a temperature measured in the display member or a temperature measured around the display member, and control heat transferred to the display member.

According to an embodiment, the wearable electronic device may be a device wearable on a user's face, and include a pair of display members, the frame 202 surrounding the pair of display members, and a pair of wearing members 203 extending from the frame.

According to an embodiment, each of the wearing members may include the first surface (203a) facing a first direction and the second surface 203b facing a second direction opposite to the first direction, and may be configured to contact with a part of the user's body through the first surface.

According to an embodiment, the first heat transfer member may be disposed on the wearable member.

According to an embodiment, the first heat transfer member may be disposed relatively close to the second surface of the first surface and the second surface of the wearing member.

According to an embodiment, the second heat transfer member may be disposed to at least partially overlap with the frame and at least partially surround the display member.

According to an embodiment, the wearing member may be foldable with respect to the frame, using the hinge structure 260 provided on at least one side of the frame.

According to an embodiment, the second heat transfer member may be configured to contact the first heat transfer member based on an operation of the hinge structure.

According to an embodiment, the first heat transfer member may be configured to transfer heat toward the case housing 301, when the first heat transfer member is mounted on the case housing 301 in a folded state with respect to the frame.

According to an embodiment, a part of the second heat transfer member contactable with the first heat transfer member may at least partially include an elastic material.

According to an embodiment, the display member may include a grid-patterned heat conductor.

According to an embodiment, the display member may include a spiral-shaped heat conductor.

According to an embodiment, the processor may be configured to perform an active heat control operation based on a detected temperature difference between the wearable electronic device and an ambient environment of the wearable electronic device.

According to an embodiment, the active heat control operation may include a local heating operation for a partial area of the display member to remove or prevent fogging occurring in the partial area of the display member.

According to an embodiment, the active heat control operation may include an operation of increasing a temperature generated from the processor to remove or prevent fogging.

According to an embodiment, the wearable electronic device 101 or 200 may include: the at least one display member 201; the housing including the first surface 203a facing a first direction and the second surface 203b facing a second direction opposite to the first direction, and formed to allow the first heat transfer member 280 to be disposed adjacent to the first surface in an internal space and to bring the second surface into close contact with a user's skin, when the user wears the wearable electronic device; the board 241 disposed in the internal space; the electronic component 242 disposed on at least one surface of the board; the heat transfer member 270 disposed between the electronic component and the housing; and the second heat transfer member 290 connecting the display member and the housing to each other and transferring heat from the first heat transfer member toward the display member.

According to an embodiment, the first heat transfer member may be disposed relatively close to the second surface of the first surface and the second surface of the housing.

According to an embodiment, the wearable electronic device may be a device wearable on the user's face, and the housing may include a frame surrounding the display member and the wearing member 203 extending from the frame.

According to an embodiment, the wearable member may be foldable with respect to the frame, using the hinge structure 260 provided on at least one side of the frame.

According to an embodiment, the second heat transfer member may or may not contact the first heat transfer member based on an operation of the hinge structure.

Further examples of the present disclosure are given in the following numbered paragraphs:
Paragraph 1. A wearable electronic device comprising: a display member including a heat conductor at least partially disposed thereon; a first heat transfer member disposed adjacent to at least one electronic component; and a second heat transfer member connected to the display member; wherein the first heat transfer member is configured to transfer heat from the at least one electronic component to the second heat transfer member, and the second heat transfer member is configured to transfer heat from the first heat transfer member toward the heat conductor.
Paragraph 2. The wearable electronic device of Paragraph 1, further comprising : a processor configured to determine whether to control heat transferred to the heat conductor (201a) based on one or more of a temperature of the wearable electronic device or an ambient environment temperature around the wearable electronic device.
Paragraph 3. The wearable electronic device of Paragraph 1 or 2, wherein the wearable electronic device is a device wearable on a user's face, the display member includes a pair of display members each including the heat conductor at least partially disposed thereon, and the wearable electronic device includes a frame surrounding the pair of display members, and a pair of wearing members extending from the frame.
Paragraph 4. The wearable electronic device of Paragraph 3, wherein each of the wearing members includes a first surface facing a first direction and a second surface facing a second direction opposite to the first direction, and is configured to contact with a part of the user's body through the first surface.
Paragraph 5. The wearable electronic device of Paragraph 4, wherein the first heat transfer member is disposed: on one of the wearing members.
Paragraph 6. The wearable electronic device of Paragraph 4, wherein the first heat transfer member is disposed relatively close to the second surface of the first surface and the second surface of the wearing member.
Paragraph 7. The wearable electronic device of any one of Paragraphs 3 to 6, wherein the second heat transfer member is disposed to at least partially overlap with the frame and at least partially surround one of the display members.
Paragraph 8. The wearable electronic device of any of Paragraphs 3 to 6, wherein the wearing member is foldable with respect to the frame, using a hinge structure provided on at least one side of the frame.
Paragraph 9. The wearable electronic device of Paragraph 7, wherein the second heat transfer member is configured to contact the first heat transfer member based on an operation of the hinge structure; and/or wherein the first heat transfer member is configured to transfer heat towards a case housing in which the wearable electronic device is accommodated, when the first heat transfer member is supported on the case housing in a folded state with respect to the frame.
Paragraph 10. The wearable electronic device of Paragraphs 8, wherein a part of the second heat transfer member contactable with the first heat transfer member at least partially includes an elastic material.
Paragraph 11. The wearable electronic device of any of Paragraphs 3 to 10, wherein a part of the first heat transfer member is disposed in an internal space between the first surface and the second surface of the one of the wearing members, and the at least one electronic component is disposed in the internal space.
Paragraph 12. The wearable electronic device of any one of Paragraphs 1 to 11, wherein the heat conductor includes a grid-patterned heat conductor or a spiral-shaped heat conductor.
Paragraph 13. The wearable electronic device of any one of Paragraphs 2 to 12, wherein the processor is configured to perform an active heat control operation based on a detected temperature difference between the temperature of the wearable electronic device and the ambient environment temperature around the wearable electronic device.
Paragraph 14. The wearable electronic device of Paragraph 13, wherein the active heat control operation includes a local heating operation for a partial area of the display member to remove or prevent fogging occurring in the partial area of the display member.
Paragraph 15. The wearable electronic device of Paragraphs 13 or 14, wherein the active heat control operation includes an operation of increasing a temperature generated from the processor, .
Paragraph 16. The wearable electronic device of any one of Paragraphs 1 to 15, further comprising at least one temperature sensor; wherein the temperature of the wearable electronic device is measured by the at least one temperature sensor; wherein the ambient environment temperature is measured by the at least one temperature sensor or is obtained from an external electronic device via a communication module of the wearable electronic device.

While a specific embodiment has been described above in the detailed description of an embodiment of the disclosure, it will be apparent to those skilled in the art that many modifications can be made without departing from the spirit of the disclosure. In the specific embodiment of the disclosure, for example, the type of a heat conductor and an operation of preventing fogging in a local area may be appropriately set according to the structure, required specification, and actual use environment of a wearable electronic device.

## Claims

1. A wearable electronic device (101; 200) comprising:
a display member (201) including a heat conductor (201a) at least partially disposed thereon;
a first heat transfer member (280) disposed adjacent to at least one electronic component; and
a second heat transfer member (290) connected to the display member (201);
wherein the first heat transfer member is configured to transfer heat from the at least one electronic component to the second heat transfer member, and the second heat transfer member is configured to transfer heat from the first heat transfer member toward the heat conductor (201a).

2. The wearable electronic device of claim 1, further comprising:
a processor configured to determine whether to control heat transferred to the heat conductor (201a) based on one or more of a temperature of the wearable electronic device or an ambient environment temperature around the wearable electronic device.

3. The wearable electronic device of claim 1 or claim 2, wherein the wearable electronic device is a device wearable on a user's face, the display member includes a pair of display members each including the heat conductor (201a) at least partially disposed thereon, and the wearable electronic device includes a frame (202) surrounding the pair of display members, and a pair of wearing members (203) extending from the frame.

4. The wearable electronic device of claim 3, wherein each of the wearing members includes a first surface (203a) facing a first direction and a second surface (203b) facing a second direction opposite to the first direction, and is configured to contact with a part of the user's body through the first surface.

5. The wearable electronic device of claim 4, wherein the first heat transfer member is disposed:
on one of the wearing members;.

6. The wearable electronic device of claim 4, wherein the first heat transfer member is disposed relatively close to the second surface of the first surface and the second surface of the wearing member.

7. The wearable electronic device of any one of claims 3 to 6, wherein the second heat transfer member is disposed to at least partially overlap with the frame and at least partially surround one of the display members.

8. The wearable electronic device of any of claims 3 to 6, wherein the wearing member is foldable with respect to the frame, using a hinge structure (260) provided on at least one side of the frame.

9. The wearable electronic device of claim 8, wherein the second heat transfer member is configured to contact the first heat transfer member based on an operation of the hinge structure; and/or
wherein the first heat transfer member is configured to transfer heat towards a case housing (301) in which the wearable electronic device is accommodated, when the first heat transfer member is supported on the case housing (301) in a folded state with respect to the frame.

10. The wearable electronic device of claim 8, wherein a part of the second heat transfer member contactable with the first heat transfer member at least partially includes an elastic material.

11. The wearable electronic device of any of claims 3 to 10, wherein a part of the first heat transfer member is disposed in an internal space between the first surface and the second surface of the one of the wearing members, and the at least one electronic component is disposed in the internal space.

12. The wearable electronic device of any one of claims 1 to 11, wherein the heat conductor includes a grid-patterned heat conductor or a spiral-shaped heat conductor.

13. The wearable electronic device of any one of claims 2 to 12, wherein the processor is configured to perform an active heat control operation based on a detected temperature difference between the temperature of the wearable electronic device and the ambient environment temperature around the wearable electronic device.

14. The wearable electronic device of claim 13, wherein the active heat control operation includes a local heating operation for a partial area of the display member to remove or prevent fogging occurring in the partial area of the display member.

15. The wearable electronic device of claim 13 or 14, wherein the active heat control operation includes an operation of increasing a temperature generated from the processor..
